# FASCICULE DE BREVET EUROPEEN

(11) **EP 1 993 914 B1**
(45) Date de publication et mention de la délivrance du brevet: **23.03.2011**
(21) Numéro de dépôt: 07730990.4
(22) Date de dépôt: 15.02.2007
(51) Int. Cl.: B65B 47/08, B65B 29/10, B29C 49/00, B29C 65/76

(54) **PROCEDE DE FABRICATION D'UN CONTENANT DU TYPE COMPORTANT DEUX OU PLUSIEURS COMPARTIMENTS**
VERFAHREN ZUR HERSTELLUNG EINES ZWEI ODER MEHR KAMMERN UMFASSENDEN BEHÄLTERS
METHOD FOR MAKING A CONTAINER COMPRISING TWO OR MORE COMPARTMENTS

(30) Priorité: 15.02.2006 FR 0601314
(43) Date de publication de la demande: 26.11.2008
(73) Titulaire: Harari, Clément, Marke, 35120 Roz-Landrieux (FR)
(72) Inventeur: HARARI, Clément, Marke, 35120 Roz-Landrieux (FR)
(74) Mandataire: Long, Giorgio
(86) Numéro de dépôt international: PCT/FR2007/000279
(87) Numéro de publication internationale: WO 2007/093713

(56) Documents cités:
- EP-A- 1 136 230
- EP-A- 1 424 056
- EP-A2- 0 920 849
- EP-A2- 0 972 506
- WO-A-94/16664
- WO-A-03/082549
- DE-B- 1 243 860

## Description

La présente invention a pour objet un procédé de fabrication d'un contenant, tel qu'un emballage primaire, du type comportant deux ou plusieurs compartiments.

Le procédé selon l'invention peut être appliqué, par exemple, à la fabrication d'un indicateur de contrôle de la température de conservation de produits réfrigérés tel que celui qui est décrit dans le brevet WO 99/63313. Le dispositif de contrôle de température décrit dans ce brevet se présente sous la forme d'une enveloppe qui consiste en deux compartiments séparés par un étranglement capable de s'ouvrir ou de se déchirer après sollicitation. La congélation des produits liquides contenus dans les compartiments provoque la dilatation de ces produits ce qui a pour effet de provoquer l'ouverture de l'étranglement séparant les deux compartiments. Par la suite, si la température ambiante atteint la température de fusion des produits, ces derniers reprennent leur état liquide et vont alors pouvoir se mélanger dans les deux compartiments du fait de l'absence d'une séparation étanche entre les deux compartiments.

Dans la présente description, on entendra par sollicitation prédéterminée, les contraintes capables de rompre la séparation entre les compartiments du contenant, telles que les contraintes thermiques qui viennent d'être décrites, ou des contraintes mécaniques exercées volontairement depuis l'extérieur du contenant comme, par exemple, une pression manuelle. Le caractère prédéterminé de la sollicitation concerne non seulement la nature de cette sollicitation (thermique, mécanique, etc.) mais aussi l'amplitude de la sollicitation (écart de température, amplitude des forces, etc.).

On connaît également par le document EP 1424 056, une poche médicale présentant au moins deux compartiments, constituée d'un matériau polymère souple et destinée à réaliser des mélanges médicaux. Cette poche est réalisée par soudure sur les zones de bord d'une feuille souple pliée du matériau polymère tandis que les deux compartiments sont séparés l'un de l'autre par une soudure qui a été réalisée à une température inférieure à la température de soudure des bords. De cette manière, cette soudure réalisée à une température inférieure est plus fragile et donc déchirable sous l'effet d'une force comprise entre 5N et 20N. La poche souple ainsi obtenue peut contenir deux produits distincts et séparés dans chaque compartiment et la rupture de la soudure de séparation permet le mélange de ces deux produits en vue de l'utilisation du mélange ainsi obtenu. Toutefois, si une telle poche souple peut être parfaitement utilisée dans le milieu médical pour contenir des solutions médicamenteuses, elle présente certains inconvénients. En effet, cette poche souple peut s'avérer fragile lors de sa manipulation, à l'occasion de chocs ou d'efforts imprimés à la poche qui peuvent résulter en une rupture intempestive de la séparation entre les compartiments conduisant à un mélange des produits non souhaité. En outre, une telle poche ne pourrait pas être utilisable dans le cas d'un indicateur de contrôle de la température de conservation de produits réfrigérés, car la dilatation des contenus lors de la congélation serait absorbée par la souplesse du matériau constituant la poche.

Un procédé de fabrication d'une poche de ce type est également proposé dans EP 0 972 506 dans lequel deux feuilles de matériau plastique sous forme de film multicouche sont superposées et soudées le long de leur périphérie tandis qu'une portion intermédiaire sépare la porche en deux compartiments. Cette portion de séparation est obtenue par l'adhérence des deux feuilles superposées résultant d'un procédé de réticulation sous bombardement électronique du film multicouche. Là encore, une pression appliquée sur la poche avec une force suffisante permet de rompre l'adhérence et de libérer un passage entre les compartiments dont les contenus peuvent se mélanger. Néanmoins comme dans la poche souple décrite ci-dessus, des efforts appliqués de manière non souhaitée lors de la manutention, peuvent conduire à une rupture intempestive de la séparation. De même, une telle poche n'est pas utilisable en tant qu'indicateur de contrôle de la température de conservation de produits réfrigérés.

Bien entendu, pour préserver les produits de ce type d'inconvénients liés à des chocs par exemple, on sait fabriquer des contenants non souples présentant une certaine rigidité tels que ceux obtenus selon le procédé de fabrication décrit dans EP 1 136 230, dans lequel on soude deux feuilles de matériaux thermoscellables pour définir une cellule de contenant ayant une ouverture. Cette cellule est ensuite placée dans un moule de formage, un fluide de formage étant ensuite introduit à travers l'ouverture de la cellule dans ladite cellule pour que celle-ci épouse la forme intérieure du moule tout en masquant la soudure à l'intérieur du contenant Toutefois, un tel procédé ne permet pas de concevoir un contenant avec une séparation définissant des compartiments.

La présente invention a donc pour but de proposer un procédé de fabrication d'un contenant, tel qu'un emballage primaire, du type comportant au moins deux compartiments, pouvant fonctionner comme ceux décrits dans les brevets WO 99/63313, EP 0 972 506 et EP 1424 056 mais ne présentant pas leurs inconvénients et qui soit à la fois simple à mettre en oeuvre et efficace.

Pour ce faire, un procédé conforme à la présente invention est du type qui comporte les étapes suivantes :
- une première étape de soudure thermique réalisée entre deux feuilles de manière à former la périphérie du contenant et réalisée à une première température telle que ladite soudure soit résistante à une sollicitation prédéterminée, tout en ménageant des orifices de remplissage,
- une deuxième étape de soudure thermique réalisée pour former au moins une séparation entre des compartiments et réalisée à une seconde température inférieure à ladite première température et telle que ladite soudure soit fragile à ladite sollicitation,
- une troisième étape de remplissage desdits compartiments,
caractérisé en ce qu'après ladite première étape de soudure, lesdites deux feuilles soudées sont disposées dans un moule dont elles épousent la forme sous la pression d'un gaz.

Ce procédé permet d'obtenir un contenant étanche dont les compartiments sont séparés par une séparation fragile à une sollicitation prédéterminée grâce à l'utilisation de deux températures distinctes de thermo scellage permettant de faire varier le degré de scellage entre étanchéité et fragilité tout en présentant une forme venant du moule lui conférant une tenue mécanique et une rigidité certaines.

De manière avantageuse, on utilise des feuilles de matériau, de préférence, rigide thermoformable qui, après la première étape de thermoscellage, sous l'effet de la chaleur, peuvent se déformer sous pression d'un gaz injecté dans un moule. Les parois du moule étant alors généralement froides, les feuilles se rigidifient de nouveau. Par conséquent, le procédé selon l'invention permet d'obtenir un contenant pourvu d'une séparation résultant de la mise en contact l'une avec l'autre de parties des faces opposées des feuilles de matériau dans le moule et présentant une tenue mécanique et une rigidité lui conférant une bonne résistance lors de manipulation. Toutefois, le contenant obtenu présente une déformabilité suffisante pour que l'on puisse exercer dessus une pression mécanique ou thermique en vue de rompre la séparation entre les compartiments.

On comprendra, dans la présente invention, que lesdites feuilles peuvent être des bandes qui sont découpées au moment de la première étape de soudure.

Selon un mode de réalisation de l'invention, on met ensuite en place des moyens de fermeture dudit contenant.

De manière avantageuse, le moule est défini de manière à mettre en contact l'une avec l'autre des parties de faces opposées des feuilles, lors de la mise en forme des deux feuilles soudées sous la pression d'un gaz, pour former, par la deuxième soudure au niveau desdites parties en contact, ladite ou chaque séparation entre lesdits compartiments.

Ainsi, selon une forme de réalisation, le moule est conformé de manière à pincer à au moins un endroit les deux feuilles soudées dans la première étape de soudure de sorte que, lorsque le gaz est injecté, les feuilles épousent la forme du moule en étant repoussées vers les parois de celui-ci alors que les parties en contact, pincées par le moule, forment par la deuxième soudure, ladite ou chaque séparation entre lesdits compartiments. Ainsi, lors de la mise en place des feuilles thermosoudées à leur périphérie dans le moule, celui-ci présente au moins une paroi en saillie vers l'intérieur de l'enceinte définie par le moule, destinée à pincer lesdites feuilles soit avec une paroi ménagée en regard et également saillie dans le moule soit avec la paroi opposée dudit moule de sorte que lesdites feuilles restent soudées et forment la séparation tandis que le gaz insufflé repousse les deux feuilles contre les parois du moule et définit les compartiments. En fonction du nombre de parois en saillie dans le moule, il est tout à fait possible d'ainsi former plusieurs séparations aboutissant à plus de deux compartiments pour un même contenant

Selon une autre forme de réalisation de l'invention, la deuxième soudure est réalisée après pénétration d'au moins une matrice à l'intérieur du moule, lors de la mise en forme du contenant, vers l'intérieur du contenant, entraînant avec elle au moins une face dudit contenant sans déchirure de ladite face. Ceci aboutit à la formation de ladite ou chaque séparation entre les compartiments. Par exemple, la séparation peut être obtenue par pénétration de deux matrices vers l'intérieur du contenant en entraînant deux faces, opposées l'une à l'autre, les deux faces se rejoignant pour être alors soudées. On obtient alors un contenant comportant deux compartiments. Dans un autre exemple de réalisation, une seule matrice prévue sur le moule va pénétrer vers l'intérieur du contenant en entraînant une seule face du contenant et rejoindre la face opposée où la soudure sera réalisée pour sceller les deux faces et former la séparation du contenant. On obtient, dans ce cas également, un contenant comportant deux compartiments.

Le moule est ainsi conformé pour présenter au moins une matrice entraînable vers l'intérieur de l'enceinte du moule pour entraîner avec elle au moins une face dudit contenant mis en forme dans le moule sans déchirure de ladite face.

Il est tout à fait possible d'ainsi former plusieurs séparations aboutissant à plus de deux compartiments dans un même contenant

Selon une autre caractéristique de l'invention, le moule est de forme parallélépipédique, de préférence rectangulaire ou carrée.

Avantageusement, ladite au moins une paroi en saillie du moule ou ladite au moins une matrice du moule, utilisée dans le procédé selon l'invention présente au moins un angle aigu. De ce fait, la séparation entre lesdits compartiments présentera alors au moins un angle aigu. Un tel angle aigu constitue une amorce de rupture ce qui permet de faciliter la rupture de la séparation après sollicitation.

Selon une autre caractéristique de l'invention, les compartiments sont remplis par l'intermédiaire des orifices de remplissage, par différents produits humides de densité variable, de liquide à dense.

L'invention a également pour objet un contenant, comportant au moins deux compartiments, et obtenu par ledit procédé de fabrication.

Selon un mode de réalisation de l'invention, ledit contenant obtenu par ledit procédé de fabrication selon l'invention, comporte au moins deux compartiments séparés par une séparation fragile à une sollicitation prédéterminée et qui présente au moins un angle aigu de façon à faciliter la rupture de ladite soudure après ladite sollicitation. Ce type de contenant convient, par exemple, pour une utilisation dans le contrôle de la chaîne du froid ou le conditionnement de produits différents destinés à être mélangés après une sollicitation prédéterminée dudit contenant, tout en présentant une certaine rigidité à l'inverse d'une poche souple.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
La Fig. la est une coupe transversale vue de côté d'un contenant obtenu après la première étape de soudure du procédé selon la présente invention,
La Fig. 1b est une coupe transversale vue de face d'un contenant obtenu après la première étape de soudure du procédé selon la présente invention,
La figure 1c est une coupe transversale vue du dessus d'un moule renfermant le contenant obtenu après la première étape de soudure du procédé selon la présente invention,
La figure 1d est une coupe transversale vue du dessus d'un moule renfermant le contenant obtenu après la deuxième étape de soudure du procédé selon la présente invention,
La Fig. 2a est une coupe transversale vue du dessus d'un moule renfermant le contenant obtenu après la première étape de soudure d'une variante de réalisation du procédé selon la présente invention,
La Fig. 2b est une coupe transversale vue du dessus d'un moule renfermant un contenant obtenu après la deuxième étape de soudure d'une variante de réalisation du procédé selon la présente invention,
La Fig. 3 est une coupe transversale vue de face d'un contenant obtenu après la deuxième étape de soudure du procédé selon la présente invention,
La Fig. 4 est une coupe transversale vue de face d'un contenant obtenu selon le procédé de la présente invention,
La Fig. 5 est une coupe transversale vue de face d'un contenant obtenu selon le procédé de la présente invention après sollicitation et
La Fig. 6 est une vue en plan d'un exemple de moule pour la mise en oeuvre du procédé de l'invention.

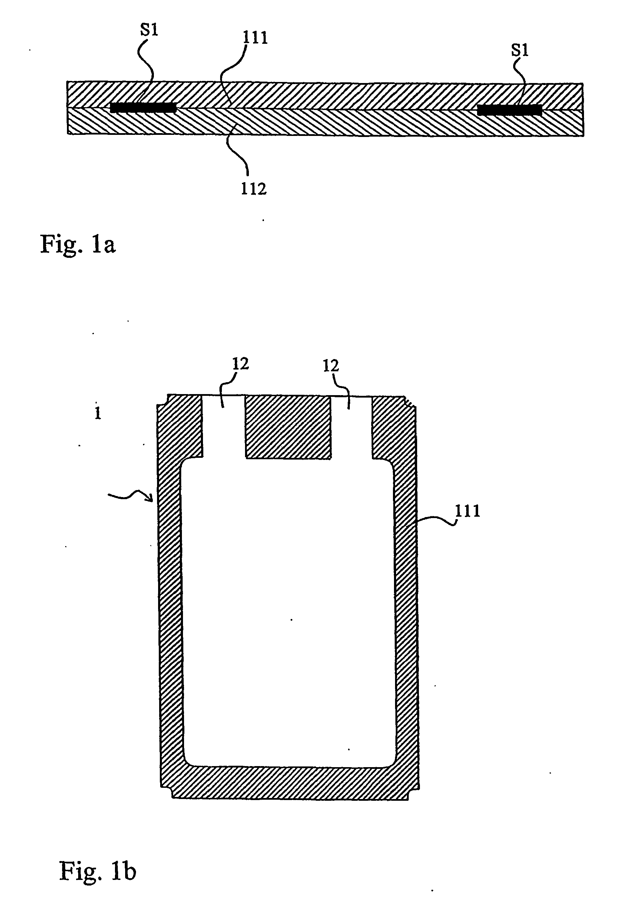

Comme illustré aux Figures 1a et 1b, au cours de la première étape d'un procédé selon l'invention, une première soudure thermique à température dite élevée S1 est réalisée entre deux feuilles 111 et 112, souples ou rigides, de manière à former le périmètre du contenant 1. La température de la soudure S1 est telle qu'elle permet de sceller le périmètre du contenant d'une façon dite étanche, ou résistante à une sollicitation prédéterminée.

La première étape de soudure thermique S1 est réalisée tout en ménageant des orifices 12 de remplissage du contenant 1, comme l'illustre la Fig. 1b. Ces orifices 12 de remplissage sont prévus de manière à permettre le remplissage futur des compartiments du contenant par les produits à conditionner.

A la suite de la première étape de soudure S1, les deux feuilles 111 et 112 soudées sont disposées dans un moule 2 dont elles épousent la forme sous la pression d'un gaz injecté, par exemple, par les orifices 12 de remplissage (voir Fig. 1b).

Selon un mode de réalisation, le moule 2' peut être conformé pour pincer à au moins un endroit les deux feuilles 111 et 112 de sorte que, lorsque le gaz est injecté, les feuilles 111 et 112 épousent la forme du moule 2' en étant repoussées vers les parois de celui-ci alors que les parties en contact, pincées par le moule, se soudent et forment la séparation 14 sous l'effet d'une chaleur appliquée à une température inférieure à la température de soudure précédente de sorte que la soudure S2 de séparation est plus fragile. On a ainsi formé lors du soufflage du gaz, au moins une séparation 14 entre deux compartiments 13 du contenant 1 résultant des parties des faces des feuilles 111 et 112, pincées par le moule 2' et soudées. La chaleur appliquée pour effectuer cette seconde soudure S2 peut être constituée de manière avantageuse de la chaleur résiduelle de l'étape de thermoscellage préalable.

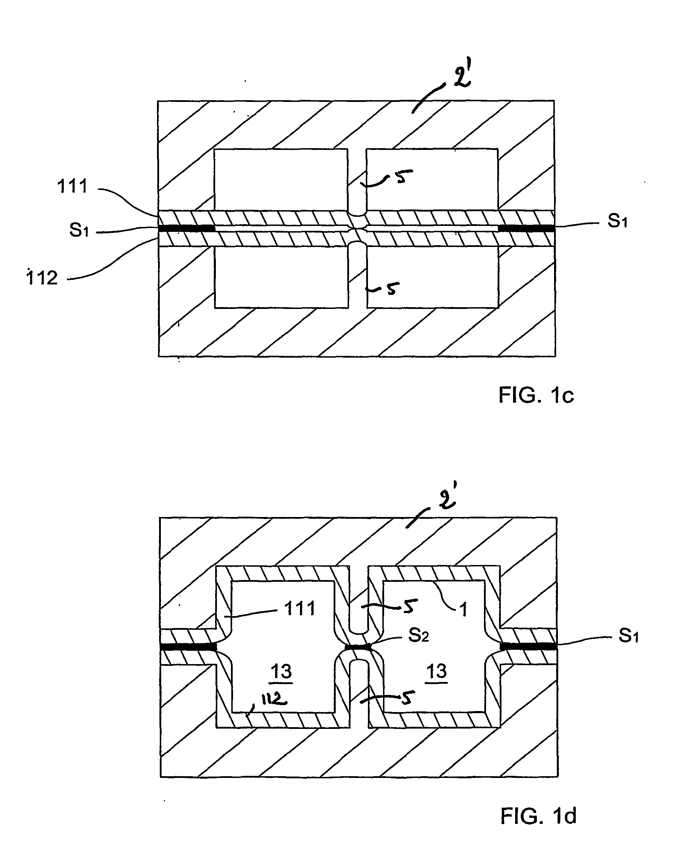

Le moule peut ainsi présenter deux parois 5 ménagées en saillie vers l'intérieur dudit moule 2', en regard l'une de l'autre de manière à pincer entre elles les deux feuilles 111 et 112 comme on peut le voir aux figures 1c et 1d. On pourrait avoir également une seule paroi en saillie vers l'intérieur du moule venant pincer les deux feuilles 111 et 112 contre la paroi du moule 2 opposée.

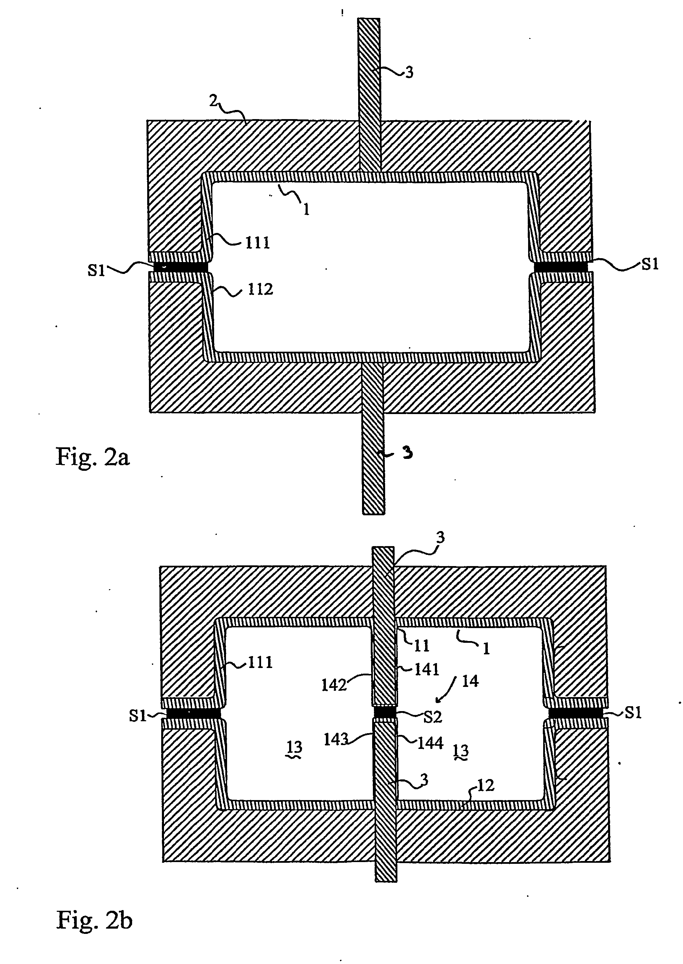

Au cours d'une variante de réalisation du procédé selon l'invention, une fois, le gaz insufflé et les feuilles 111 et 112 plaquées contre les parois du moule 2, au moins une matrice 3 (dans l'exemple illustré aux Fig. 2a et 2b, deux matrices 3) pénètre à l'intérieur du moule 2 et entraîne avec elle(s), sans les percer, les faces 11 et 12 opposées du contenant 1 qui se retrouvent alors en contact l'une avec l'autre. Là, par apport de la chaleur nécessaire, une seconde soudure S2 est réalisée entre les deux faces 11 et 12 à une température inférieure à la température de la première soudure S1, température telle que ladite soudure S2 soit fragile à une sollicitation prédéfinie. La soudure S2 est dite pelable et permet de former une séparation 14, constituée des parois 141 à 144 résultant des parties des faces 11 et 12 qui ont été entraînées par la matrice 3, et, ainsi, deux compartiments 13 du contenant 1.

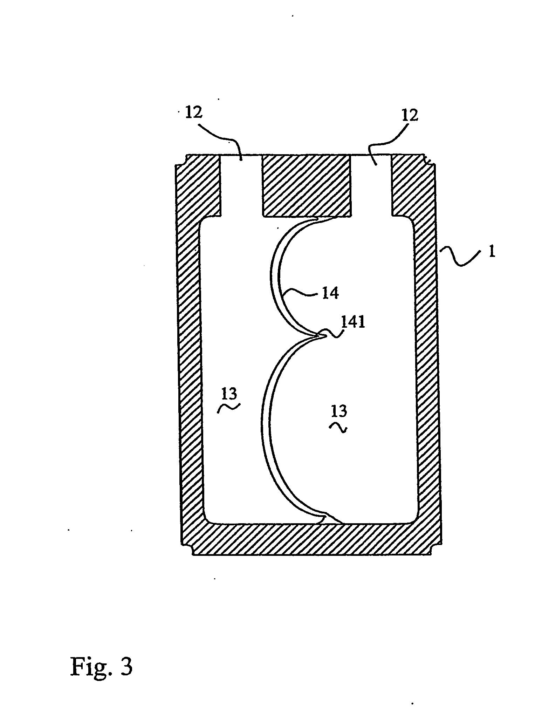

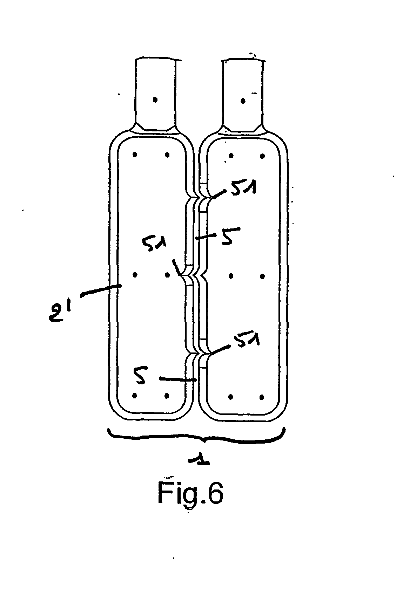

De façon avantageuse, et comme représenté à la Fig. 3, ladite séparation 14 entre les compartiments 13 présente au moins un angle aigu 141. Pour donner à la séparation 14 une telle configuration,la ou les parois 5 du moule (voir la figure 6) ou la ou les matrice(s) 3 utilisée(s) à la deuxième étape présente(nt) au moins un angle aigu. Ainsi, la ou les paroi(s) 5 ou la ou les matrice(s) 3 vont permettre de former une séparation 14 selon une configuration présentant au moins angle aigu 141 identique à l'angle aigu de ladite matrice 3. Cet angle aigu 141 dans la séparation 14 forme une amorce de rupture qui permet de faciliter la rupture de ladite deuxième soudure S2 lorsqu'elle est soumise à une sollicitation prédéterminée.

La figure 6 représente un exemple d'une partie d'un moule 2' dans lequel on peut voir que la paroi 5 en saillie vers l'intérieur de l'enceinte définie par le moule 2' comporte trois angles aigus 51 de manière à former une séparation dans le contenant qui présentera trois angles aigus. De part et d'autre de la paroi 5 sont définis les compartiments du contenant. L'autre partie du moule2' ou demi-moule peut être identique, les parois 5 en regard pinçant alors les feuilles 112 et 111 insérées dans le moule 2'.

La troisième étape du procédé selon l'invention est le remplissage desdits compartiments 13 par l'intermédiaire des orifices 12 précédemment aménagés au cours de la première étape du procédé de fabrication du contenant 1 (voir Fig. 3). Les produits destinés à être contenus dans un contenant obtenu par le procédé de fabrication selon l'invention sont des produits liquides de densité pouvant varier de faible à forte.

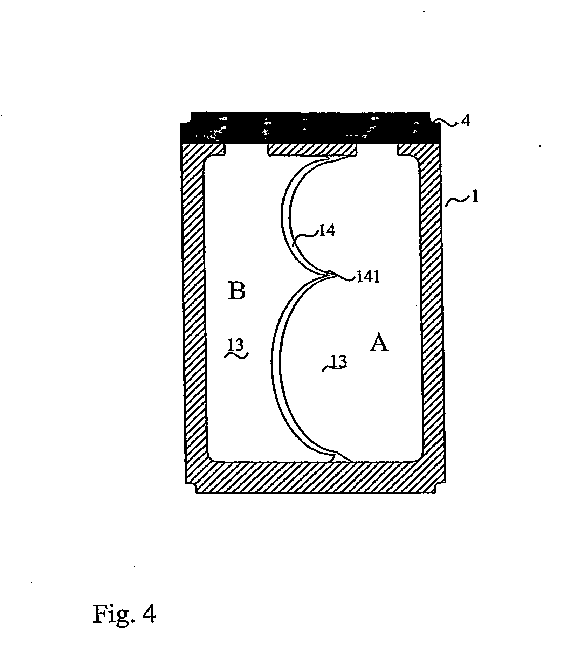

Enfin, il est possible de sceller le contenant en plaçant des moyens de fermeture 4 pour chacun des compartiments comme représenté à la Fig. 4. La fermeture du contenant peut notamment être obtenu par un nouveau soudage thermique à température élevée pour sceller de manière étanche les orifices de remplissage.

La Fig. 4 illustre un contenant 1 obtenu par le procédé de fabrication selon l'invention.

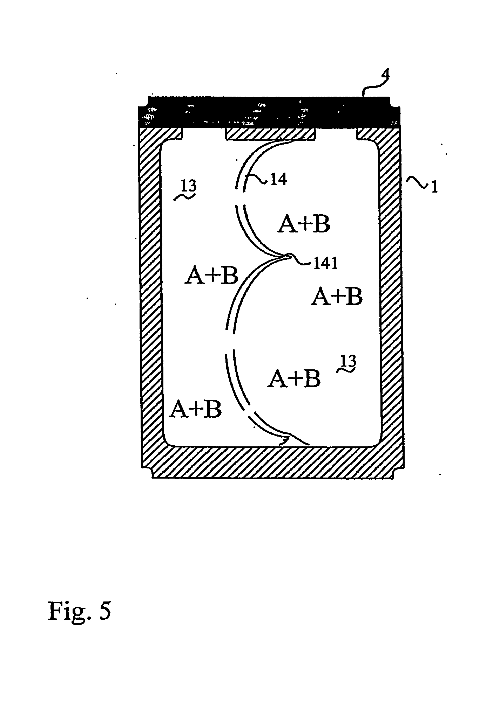

Dans ce mode de réalisation, ledit contenant 1 comporte deux compartiments 13 sépares par une séparation 14 présentant un angle aigu 141. Les compartiments 13 contiennent des produits liquides différents, respectivement A et B. Comme l'illustre la Fig. 5, ces deux produits liquides vont se mélanger à la suite de la rupture de la séparation 14 après sollicitation. La sollicitation peut, par exemple, être une sollicitation thermique telle que décrite précédemment. Ainsi, la congélation qui a pour effet de dilater les produits provoque la rupture de la séparation 14. Par la suite, si la température ambiante atteint la température de fusion des produits, ces derniers reprennent leur état liquide et vont alors pouvoir se mélanger dans les deux compartiments 13. Un tel principe peut, par exemple, être utilisé pour le contrôle de la chaîne du froid.

La sollicitation peut également être mécanique et obtenue par pression exercée sur l'un des compartiments du contenant, ledit contenant bien que rigide restant malgré tout déformable.

Ainsi, la présente invention fournit un procédé simple et efficace pour la fabrication d'un contenant du type comportant au moins deux compartiments, ledit contenant trouvant application dans tous les domaines où des produits, initialement séparés, doivent à un moment déterminé être mélangés.

## Revendications

1. Procédé de fabrication d'un contenant (1) du type comprenant deux ou plusieurs compartiments, ledit procédé comportant les étapes suivantes :
- une première étape de soudure thermique (S1) réalisée entre deux feuilles (111, 112) de manière à former la périphérie du contenant et réalisée à une première température telle que ladite soudure (S1) soit résistante à une sollicitation prédéterminée, tout en ménageant des orifices de remplissage (12),
- une deuxième étape de soudure thermique (S2) réalisée pour former au moins une séparation entre des compartiments (13) et réalisée à une seconde température inférieure à ladite première température et telle que ladite soudure (S2) soit fragile à ladite sollicitation,
- une troisième étape de remplissage desdits compartiments (13),
**caractérisé en ce qu'**après ladite première étape de soudure, lesdites deux feuilles soudées (111, 112) sont disposées dans un moule (2, 2') dont elles épousent la forme sous la pression d'un gaz.

2. Procédé de fabrication selon la revendication 1, **caractérisé en ce que** l'on met en place des moyens de fermeture dudit contenant.

3. Procédé de fabrication selon l'une des revendications 1 ou 2, **caractérisé en ce que** le moule (2, 2') est défini de manière à mettre en contact l'une avec l'autre des parties de faces opposées des feuilles (111, 112), lors de la mise en forme des deux feuilles (111, 112) soudées sous la pression d'un gaz, pour former, par la deuxième soudure (S2) au niveau desdites parties en contact, ladite ou chaque séparation entre lesdits compartiments (13).

4. Procédé selon la revendication 3, **caractérisé en ce que** le moule (2') est conformé de manière à présenter au moins une paroi (5) en saillie vers l'intérieur du moule (2') destinée à pincer lesdites feuilles (111, 112) disposées dedans.

5. Procédé de fabrication selon l'une des revendications 1 à 3, **caractérisé en ce que**, préalablement à ladite deuxième soudure (S2), des parties de faces opposées du contenant sont mises en contact l'une avec l'autre pour former ladite ou chaque séparation entre lesdits compartiments (13), par entraînement desdites faces opposées par l'intermédiaire d'au moins une matrice (5).

6. Procédé de fabrication selon l'une quelconque des revendications précédentes, **caractérisé en ce que** ladite au moins une matrice (3) ou ladite au moins une paroi (5) en saillie vers l'intérieur du moule (2') présente au moins un angle aigu de manière à former au moins un angle aigu (51) sur ladite séparation (14).

7. Procédé de fabrication selon l'une quelconque des revendications précédentes, **caractérisé en ce que** ledit moule (2) est de forme parallélépipédique, de préférence rectangulaire ou carrée.

8. Procédé de fabrication selon l'une quelconque des revendications précédentes, **caractérisé en ce que** le remplissage des compartiments (13) est effectue au moyen de produits humides de densité variable, de faible a forte.

## Claims

1. Process for manufacturing a container (1) of the type comprising two or more compartments, said process comprising the following steps:
- a first heat-sealing step (S1) carried out between two sheets (111, 112) so as to form the container periphery and carried out at a first temperature so that said sealing (S1) resists to a predetermined stress, while providing filling holes (12),
- a second heat-sealing step (S2) carried out to form at least a separation between compartments (13) and carried out at a second temperature lower than said first temperature and such that said sealing (S2) is fragile under said stress,
- a third step of filling said compartments (13), **characterized in that** after said first sealing step, said two sealed sheets (111, 112) are placed in a mould (2, 2') of which they take the shape under a gas pressure.

2. Manufacturing process according to claim 1, **characterized by** providing closing means of said container.

3. Manufacturing process according to one of claims 1 or 2, **characterized in that** the mould (2, 2') is defined in such a way to make parts of opposite sheet faces (111, 112) to be in mutual contact, upon forming the two sheets (111, 112) sealed under a gas pressure, in order to form, through the second sealing (S2) at said contacting parts, said or each separation between said compartments (13).

4. Process according to claim 3, **characterized in that** the mould (2') is shaped in such a way to have at least one wall (5) protruding towards the inside of the mould (2') intended to pinch said sheets (111, 112) arranged inside it.

5. Manufacturing process according to one of claims 1 to 3, **characterized in that**, before said second sealing (S2), parts of opposite faces of the container are put in mutual contact to form said or each separation between said compartments (13), by dragging said opposite faces by means of at least one die (3).

6. Manufacturing process according to any one of the previous claims, **characterized in that** said at least one die (3) or said at least one wall (5) protruding towards the inside of the mould (2') has at least one acute angle so as to form at least an acute angle (51) on said separation (14).

7. Manufacturing process according to any one of the previous claims, **characterized in that** said mould (2) is shaped as parallelepiped, preferably as a rectangle or square.

8. Manufacturing process according to any one of the previous claims, **characterized in that** the compartment filling (13) is carried out through wet products of variable density, from low to high.

## Patentansprüche

1. Verfahren zur Herstellung eines Behälters (1) einer Ausführung, die zwei oder mehrere Kammern aufweist, wobei das Verfahren die folgenden Schritte umfasst:
- einen ersten Schritt thermischen Schweißens (S1), der zwischen zwei Folien (111, 112) derart ausgeführt wird, dass die Begrenzung des Behälters ausgebildet wird, und bei einer ersten Temperatur derart ausgeführt wird, dass die Schweißung (S1) einer vorbestimmten Beanspruchung widersteht, um dadurch Einfüllöffnungen (12) auszuführen,
- einen zweiten Schritt thermischen Schweißens (S2), der ausgeführt wird, um mindestens eine Abtrennung zwischen den Kammern (13) auszubilden, und bei einer zweiten Temperatur ausgeführt wird, die geringer als die erste Temperatur ist, und derart ausgeführt wird, dass die Schweißung (S2) bezüglich der Beanspruchung unbeständig ist,
- einen dritten Schritt des Füllens der Kammern (13),
**dadurch gekennzeichnet, dass** nach dem ersten Schritt des Schweißens die geschweißten Folien (111, 112) in einer Modellform (2, 2') angeordnet werden, deren Form sie unter dem Druck eines Gases annehmen.

2. Verfahren zur Herstellung eines Behälters (1) gemäß Anspruch 1, **dadurch gekennzeichnet, dass** Verschlussmittel des Behälters angebracht werden.

3. Herstellungsverfahren gemäß Anspruch 1 oder 2, **dadurch gekennzeichnet, dass** die Modellform (2, 2') derart bestimmt ist, dass sie Bereiche gegenüberliegender Flächen der Folien (111, 112) gegenseitig in Kontakt bringt, während die beiden geschweißten Folien (111, 112) unter dem Druck eines Gases in die Form gebracht werden, um durch die zweite Schweißung (S2) auf der Ebene der beiden in Kontakt befindlichen Bereiche die oder jede Abtrennung zwischen den Kammern (13) auszubilden.

4. Verfahren nach Anspruch 3, **dadurch gekennzeichnet, dass** die Modellform (2') derart ausgebildet ist, dass sie mindestens eine zum Inneren der Modellform (2') vorkragende Wand (5) aufweist, die bestimmt ist, die darin angeordneten Folien (111, 112) zu klemmen.

5. Herstellungsverfahren gemäß einem der Ansprüche 1 bis 3, **dadurch gekennzeichnet, dass** vor der zweiten Schweißung (S2) die Bereiche gegenüberliegender Flächen des Behälters durch Mitnehmen der gegenüberliegenden Flächen mittels mindestens einer Matrize miteinander in Kontakt gebracht werden, um die oder jede Abtrennung zwischen den Kammern (13) zu bilden.

6. Herstellungsverfahren gemäß einem der vorhergehenden Ansprüche, **dadurch gekennzeichnet, dass** die mindestens eine Matrize (3) oder die mindestens eine zum Inneren der Modellform (2') vorkragende Wand (5) mindestens einen spitzen Winkel derart darstellt, dass an der Abtrennung (14) mindestens ein spitzer Winkel (51) gebildet wird.

7. Herstellungsverfahren gemäß einem der vorhergehenden Ansprüche, **dadurch gekennzeichnet, dass** die Modellform (2) eine parallelepipedische Form aufweist, die vorzugsweise rechteckig oder quadratisch ist.

8. Herstellungsverfahren gemäß einem der vorhergehenden Ansprüche, **dadurch gekennzeichnet, dass** das Füllen der Kammern (13) mit feuchten Produkten variabler, von hoch bis niedrig reichender Dichte bewirkt wird.
